# EUROPÄISCHE PATENTSCHRIFT

(11) **EP 3 663 796 B1**
(45) Veröffentlichungstag und Bekanntmachung des Hinweises auf die Patenterteilung: **02.06.2021**
(21) Anmeldenummer: 18209924.2
(22) Anmeldetag: 03.12.2018
(51) Int. Cl.: G01S 13/20, G01S 13/36

(54) **VERFAHREN ZUR BESTIMMUNG EINES ABSTANDS**
METHOD FOR DETERMINING A DISTANCE
PROCÉDÉ DE DÉTERMINATION D'UNE DISTANCE

(43) Veröffentlichungstag der Anmeldung: 10.06.2020
(73) Patentinhaber: SICK AG, 79183 Waldkirch (DE)
(72) Erfinder: Müncher, Martin, 79261 Gutach im Breisgau (DE); Dulat, Simon, 79211 Denzlingen (DE); Zimmermann, Ralf, 79331 Teningen (DE); Mabon, Remi, 79183 Waldkirch (DE); Daubmann, Michael, 79674 Todtnau (DE); Ruh, Dominic, 79102 Freiburg (DE)
(74) Vertreter: Manitz Finsterwald Patent- und Rechtsanwaltspartnerschaft mbB

(56) Entgegenhaltungen:
- US-A- 6 043 774
- US-A1- 2016 124 083

## Beschreibung

Die Erfindung betrifft ein Verfahren zur Bestimmung eines Abstands zu einem Zielobjekt mittels einer Laufzeitmessung, wobei das Verfahren ein Bestrahlen des Zielobjekts mit einem elektromagnetischen Referenzsignal, ein Empfangen eines von dem Zielobjekt reflektierten Anteils des Referenzsignals als ein Messsignal, ein Bestimmen einer Phasendifferenz zwischen dem Referenzsignal und dem Messsignal und ein Bestimmen einer Abstandsinformation aus der Phasendifferenz umfasst.

Verfahren zur Bestimmung eines Abstands zu einem Zielobjekt mittels einer Laufzeitmessung werden unter anderem in der Automatisierungstechnik eingesetzt, beispielsweise in der Fertigungstechnik oder der Verfahrenstechnik. Außerdem werden derartige Verfahren in der Fahrzeugtechnik angewendet, um beispielsweise den Abstand zu einem vorausfahrenden Fahrzeug zu messen.

Abstandsmessvorrichtungen ermöglichen es insbesondere, einen vor der Abstandsmessvorrichtung angeordneten Sicherheitsbereich zu überwachen und das Eintreten eines Objekts, beispielsweise eines Fahrzeugs oder einer Person, in den Sicherheitsbereich zu detektieren. Insbesondere bei sicherheitsgerichteten Anwendungen sollten Objekte im Sicherheitsbereich auf jeden Fall detektiert werden. Außerdem sollte vermieden werden, dass Objekte, welche außerhalb des Sicherheitsbereichs angeordnet sind, fälschlicherweise als innerhalb des Sicherheitsbereichs angeordnet detektiert werden. Derartige Fehldetektionen würden andernfalls die Verfügbarkeit der überwachten Anlage unnötig reduzieren.

Es ist daher Aufgabe der Erfindung, ein Verfahren zur Bestimmung eines Abstandes und eine Abstandsmessvorrichtung derart anzugeben, dass Fehldetektionen des Abstandes vermieden werden.

Diese Aufgabe wird durch ein Verfahren und eine Abstandsmessvorrichtung gemäß den unabhängigen Ansprüchen gelöst. Weiterbildungen sind jeweils in den abhängigen Ansprüchen, in den Zeichnungen und in der Beschreibung angegeben.

Ein Verfahren zur Bestimmung eines Abstandes zu einem Zielobjekt mittels einer Laufzeitmessung umfasst ein Bestrahlen des Zielobjekts mit einem elektromagnetischen Referenzsignal, ein Empfangen eines von dem Zielobjekt reflektierten Anteils des Referenzsignals als ein Messsignal, ein Bestimmen einer Phasendifferenz zwischen dem Referenzsignal und dem Messsignal und ein Ermitteln einer Abstandsinformation aus der Phasendifferenz. Außerdem umfasst das Verfahren ein Bestimmen einer Stärke des Messsignals und ein Vergleichen der Stärke des Messsignals mit einem vorgegebenen Schwellenwert, um festzustellen, ob das Zielobjekt innerhalb eines Eindeutigkeitsbereichs der Laufzeitmessung angeordnet ist.

Bei der Bestimmung des Abstandes zu dem Zielobjekt wird sich zu Nutze gemacht, dass sich die Phasendifferenz zwischen Referenzsignal und Messsignal linear mit dem Abstand erhöht. Da jedoch die Phasendifferenz im Rahmen der Laufzeitmessung lediglich modulo 360° bestimmt werden kann, wiederholen sich die im Rahmen des Verfahrens bestimmten Phasendifferenzen mit zunehmendem Abstand zu dem Zielobjekt, sobald sich die Phasen von Referenzsignal und Messsignal um 360° gegeneinander verschoben haben. Für einen bestimmten Wert der Phasendifferenz kann also nicht ermittelt werden, ob sich die Phasen von Messsignal und Referenzsignal während der Laufzeit des Signals in Wahrheit lediglich um den aus Referenz- und Messsignal im Intervall zwischen 0° und 360° bestimmten Wert der Phasendifferenz, oder um den im Rahmen des Verfahrens bestimmten Wert zuzüglich einem ganzzahligen Vielfachen von 360° verschoben haben.

Der Abstand zu dem Zielobjekt kann damit nur innerhalb eines sogenannten Eindeutigkeitsbereichs eindeutig bestimmt werden. Der Eindeutigkeitsbereich erstreckt sich, ausgehend von einer das Verfahren ausführenden Messvorrichtung, bis zu derjenigen Entfernung, in der die Phasenverschiebung zwischen Referenz- und Messsignal zum ersten Mal 360° beträgt. Diese Entfernung bildet eine obere Grenze des Eindeutigkeitsbereichs der Laufzeitmessung. Die obere Grenze des Eindeutigkeitsbereichs kann auch als ein Eindeutigkeitsabstand bezeichnet werden.

Insofern kann aus der Phasendifferenz zwischen Referenzsignal und Messsignal nur dann eindeutig auf den Abstand geschlossen werden, wenn sichergestellt ist, dass sich das Zielobjekt innerhalb des Eindeutigkeitsbereichs befindet. Ist dies nicht der Fall, kann aus der ermittelten Phasendifferenz nicht abgeleitet werden, ob das Zielobjekt innerhalb oder außerhalb des Eindeutigkeitsbereichs angeordnet ist. Dies kann bei Schutzbereichsüberwachungen dazu führen, dass außerhalb des Eindeutigkeitsbereichs angeordnete Objekte fälschlicherweise als innerhalb des Eindeutigkeitsbereichs und damit als innerhalb des Schutzbereichs angeordnet detektiert werden, was eine unnötige Stillsetzung der überwachten Anlage verursachen würde.

Der Erfindung liegt nun die Erkenntnis zugrunde, dass die Stärke des empfangenen Messsignals abhängig ist vom Abstand des das Messsignal reflektierenden Zielobjekts und dass folglich anhand der Stärke des Messsignals festgestellt werden kann, ob das Zielobjekt innerhalb des Eindeutigkeitsbereichs oder außerhalb des Eindeutigkeitsbereichs angeordnet ist. Dies kann insbesondere dadurch erfolgen, dass die Stärke des Messsignals mit einem Schwellenwert verglichen wird.

Da sich die Stärke des Messsignals mit zunehmendem Abstand des Zielobjekts verringert, kann der Schwellenwert derart vorgegeben sein, dass die Stärke des Messsignals oberhalb des Schwellenwerts liegt, wenn sich das Zielobjekt innerhalb des Eindeutigkeitsbereichs befindet.

Durch das Vergleichen der Stärke des Messsignals mit dem Schwellenwert kann somit auf einfache Art und Weise festgestellt werden, ob das das Messsignal erzeugende Zielobjekt innerhalb oder außerhalb des Eindeutigkeitsbereichs angeordnet ist. Der Eindeutigkeitsbereich kann insbesondere einen mittels des Verfahrens überwachten Sicherheitsbereich umfassen. Das Vergleichen der Stärke des Messsignals mit dem Schwellenwert ermöglicht es dann, festzustellen, ob das Zielobjekt tatsächlich innerhalb des Sicherheitsbereichs angeordnet ist und daher eine Sicherheitsreaktion, beispielsweise eine Abschaltung der überwachten Anlage, notwendig ist, oder ob das Zielobjekt außerhalb des Sicherheitsbereichs angeordnet ist und eine Sicherheitsreaktion nicht notwendig ist. Dadurch können eigentlich nicht erforderliche Sicherheitsreaktionen vermieden und die Verfügbarkeit einer mittels des Sicherheitsbereichs überwachten Anlage erhöht werden.

Die Stärke des Messsignals kann insbesondere reziprok quadratisch von dem Abstand abhängen, beispielsweise dann, wenn das Referenzsignal als Laserstrahlung erzeugt wird. Die Stärke des Messsignals kann auch reziprok proportional zur vierten Potenz des Abstandes abfallen, beispielsweise dann, wenn als Referenzsignal eine ungerichtete und inkohärente Strahlung verwendet wird.

Das Referenzsignal kann an dem Zielobjekt gerichtet reflektiert werden oder ungerichtet reflektiert, d. h. remittiert, werden. Insofern wird auch ein remittierter Anteil des Referenzsignals von dem reflektierten Anteil des Messsignals umfasst. Soweit im Folgenden von Reflexion gesprochen wird, ist also immer auch eine Remission des Signals umfasst. Insbesondere beschreibt eine Reflektivität des Zielobjekts immer auch das Remissionsvermögen des Zielobjekts.

Bei dem Verfahren wird der Schwellenwert in Abhängigkeit von einer maximalen Reflektivität möglicher Zielobjekte vorgegeben. Die Reflektivität der Zielobjekte bestimmt die Stärke des Messsignals. Beispielsweise kann die Stärke des Messsignals linear von der Reflektivität des Zielobjekts abhängen. Je höher die Reflektivität möglicher Zielobjekte ist, desto höher ist auch der Schwellenwert vorzugeben. Die maximale Reflektivität möglicher Zielobjekte kann zwischen 70% und 100% liegen. Insbesondere kann die maximale Reflektivität zwischen 80% und 95% liegen. Die maximale Reflektivität kann beispielsweise 90% betragen.

Indem der Schwellenwert in Abhängigkeit von einer maximalen Reflektivität möglicher Zielobjekte angegeben wird, kann beispielsweise sichergestellt werden, dass auch bei einem besonders hellen Zielobjekt mit maximaler Reflektivität der Schwellenwert unterschritten wird, wenn sich das Zielobjekt außerhalb des Eindeutigkeitsbereichs befindet. Zugleich kann der Schwellenwert in Abhängigkeit der maximalen Reflektivität auch derart gewählt werden, dass ein Arbeitsbereich, in dem auch dunkle Objekte minimaler Reflektivität zuverlässig detektiert werden, möglichst groß ist.

Bei einer alternativen Ausführungsform des Verfahrens wird der Schwellenwert derart vorgegeben, dass die Stärke des Messsignals genau dem Schwellenwert entspricht, wenn das Zielobjekt die maximale Reflektivität möglicher Zielobjekte aufweist und an einer oberen Grenze des Eindeutigkeitsbereichs der Laufzeitmessung angeordnet ist. Dadurch kann für alle Zielobjekte sichergestellt werden, dass die Stärke des Messsignals für alle Zielobjekte immer dann unter dem Schwellenwert liegt, wenn der Abstand des Zielobjekts größer ist als die obere Grenze des Eindeutigkeitsbereichs.

Bei einer alternativen Ausführungsform des Verfahrens wird der Abstand zu dem Zielobjekt lediglich in einem Arbeitsbereich bestimmt, wobei sich der Arbeitsbereich bis zu einem maximalen Arbeitsabstand erstreckt und der maximale Arbeitsabstand derart vorgegeben ist, dass die Stärke des Messsignals mindestens dem Schwellenwert entspricht, wenn das Zielobjekt in dem maximalen Arbeitsabstand angeordnet ist und wenn das Zielobjekt eine minimale Reflektivität möglicher Zielobjekte aufweist.

Insbesondere kann der Arbeitsbereich derart vorgegeben sein, dass die Stärke des Messsignals, welches von einem Zielobjekt minimaler Reflektivität erzeugt wird, stets über dem Schwellenwert liegt, solange sich das Zielobjekt innerhalb des Arbeitsbereichs befindet.

Der Arbeitsbereich kann sich zwischen einer das Messsignal empfangenden Abstandsmessvorrichtung und der oberen Grenze des Arbeitsbereichs erstrecken. Der maximale Arbeitsabstand kann auch als obere Grenze des Arbeitsbereichs bezeichnet werden.

Bei dem Verfahren wird der Schwellenwert in Abhängigkeit von der Phasendifferenz vorgegeben. Dabei wird der Schwellenwert für jede Phasendifferenz derart vorgegeben, dass die Stärke des Messsignals größer ist als der Schwellenwert, wenn das Zielobjekt innerhalb des Eindeutigkeitsbereichs angeordnet und eine Reflektivität des Zielobjekts größer als eine minimale Reflektivität möglicher Zielobjekte ist, und dass die Stärke des Messsignals kleiner als der Schwellenwert ist, wenn das Zielobjekt außerhalb des Eindeutigkeitsbereichs angeordnet und die Reflektivität des Zielobjekts kleiner als die maximale Reflektivität möglicher Zielobjekte ist.

Mit anderen Worten wird der Schwellenwert für jede Phasendifferenz derart vorgegeben, dass der Schwellenwert höchstens der Stärke eines Messsignals entspricht, das ein innerhalb des Eindeutigkeitsbereichs in einem der betreffenden Phasendifferenz entsprechenden Abstand angeordnetes Zielobjekt minimaler Reflektivität erzeugt und dass der Schwellenwert mindestens der Stärke eines Messsignals entspricht, das ein außerhalb des Eindeutigkeitsbereichs angeordnetes Zielobjekt maximaler Reflektivität erzeugt, wenn es in einem Abstand, der dem aus der betreffenden Phasendifferenz abgeleiteten Abstand zuzüglich einer Ausdehnung des Eindeutigkeitsbereichs entspricht, angeordnet ist.

Dies ermöglicht es, den Abstand zu dem Zielobjekt in einem besonders großen Bereich eindeutig zu bestimmen und demzufolge den Arbeitsbereich besonders groß zu wählen. Insbesondere kann der Arbeitsbereich bei einer derartigen Wahl des Schwellenwerts größer sein als bei einer Vorgabe des Schwellenwerts, welche unabhängig von der ermittelten Phasendifferenz ist. Der Schwellenwert kann insbesondere derart vorgegeben werden, dass er für jede Phasendifferenz derjenigen Stärke des Messsignals entspricht, die durch ein Zielobjekt minimaler Reflektivität, welches innerhalb des Eindeutigkeitsbereichs in dem aus der betreffenden Phasendifferenz bestimmten Abstand angeordnet ist, erzeugt wird.

Insbesondere wird bei dieser Ausführungsform der Schwellenwert in Abhängigkeit von der aus der Phasendifferenz ermittelten Abstandsinformation vorgegeben. Dabei wird für jeden Wert des aus der Abstandsinformation ermittelten Abstands des Zielobjekts der Schwellenwert derart vorgegeben, dass die Stärke des Messsignals für ein Zielobjekt mit minimaler Reflektivität größer ist als der Schwellenwert, wenn das Zielobjekt in dem ermittelten Abstand angeordnet ist, und dass die Stärke des Messsignals für ein Zielobjekt mit maximaler Reflektivität kleiner ist als der Schwellenwert, wenn das Zielobjekt in einem Abstand angeordnet ist, der dem ermittelten Abstand zuzüglich dem Eindeutigkeitsabstand entspricht. Damit befindet sich ein Zielobjekt, dessen Reflektivität zwischen der minimalen und der maximalen Reflektivität liegt, immer dann im Eindeutigkeitsbereich, wenn die Stärke des Messsignals größer ist als der abstandsabhängige Schwellenwert.

Bei einer Weiterbildung des Verfahrens wird der Abstand zu dem Zielobjekt lediglich in einem innerhalb des Eindeutigkeitsbereichs angeordneten erweiterten Arbeitsbereich bestimmt, wobei sich der erweiterte Arbeitsbereich bis zu einem maximalen Arbeitsabstand erstreckt. Dabei ist der maximale Arbeitsabstand derart vorgegeben, dass die Stärke des Messsignals einem Grenzwert zum einen dann entspricht, wenn das Zielobjekt die minimale Reflektivität möglicher Zielobjekte aufweist und in dem maximalen Arbeitsabstand angeordnet ist, und dass die Stärke des Messsignals dem Grenzwert zum anderen dann entspricht, wenn das Zielobjekt die maximale Reflektivität möglicher Zielobjekte aufweist und in einem Grenzabstand angeordnet ist, wobei der Grenzabstand dem maximalen Arbeitsabstand zuzüglich einer Ausdehnung des Eindeutigkeitsbereichs der Laufzeitmessung entspricht. Wird der maximale Arbeitsabstand derart vorgegeben, so weist der erweiterte Arbeitsbereich eine besonders große Ausdehnung auf.

Eine Weiterbildung des Verfahrens umfasst eine Auswahl des vorgegebenen Schwellenwerts in Abhängigkeit von einer Stärke des elektromagnetischen Referenzsignals. Dadurch kann auch bei variierender Stärke des elektromagnetischen Referenzsignals sichergestellt werden, dass anhand des Schwellenwerts festgestellt werden kann, ob der Abstand zu dem Zielobjekt eindeutig bestimmbar ist. Beispielsweise kann der Schwellenwert proportional zur Stärke des elektromagnetischen Referenzsignals ausgewählt bzw. variiert werden. Insbesondere kann der vorgegebene Schwellenwert derart ausgewählt werden, dass die Stärke des Messsignals genau dem Schwellenwert entspricht, wenn das Zielobjekt die maximale Reflektivität aufweist und an der oberen Grenze des Eindeutigkeitsbereichs angeordnet ist.

Eine Weiterbildung des Verfahrens umfasst eine Auswahl des vorgegebenen Schwellenwerts in Abhängigkeit von einer Modulationsfrequenz des elektromagnetischen Referenzsignals. Insbesondere kann der vorgegebene Schwellenwert für jede Modulationsfrequenz des Referenzsignals jeweils derart ausgewählt werden, dass durch das Vergleichen der Stärke des Messsignals mit dem vorgegebenen Schwellenwert eindeutig festgestellt werden kann, ob der Abstand zu dem Zielobjekt eindeutig bestimmbar ist. Dies ermöglicht es, für die Laufzeitmessung Referenzsignale mit unterschiedlichen Modulationsfrequenzen zu verwenden. Da die Ausdehnung des Eindeutigkeitsbereichs der Laufzeitmessung abhängig von der Modulationsfrequenz des Referenzsignals ist, kann durch Variation der Modulationsfrequenz des Referenzsignals der Eindeutigkeitsbereich variiert, insbesondere vergrößert, werden. Der Schwellenwert kann beispielswiese verringert werden, wenn sich die Modulationsfrequenz verringert, und erhöht werden, wenn sich die Modulationsfrequenz erhöht.

Bei einer Weiterbildung des Verfahrens wird die Stärke des Messsignals als ein Signal-Rausch-Verhältnis eines das Messsignal empfangenden Sensorelements bestimmt. Dies ermöglicht es, die Stärke des Messsignals auf einfache Weise zu bestimmen.

Die Erfindung betrifft weiterhin eine Abstandsmessvorrichtung zur Bestimmung eines Abstandes zu einem Zielobjekt mittels einer Laufzeitmessung die eine Emittereinheit, eine Empfängereinheit, ein Phasendifferenzmodul, ein Abstandsbestimmungsmodul, ein Signalstärkenbestimmungsmodul und ein Vergleichsmodul umfasst. Die Emittereinheit ist dazu ausgebildet, das Zielobjekt mit einem elektromagnetischen Referenzsignal zu bestrahlen und die Empfängereinheit umfasst ein Sensorelement, welches dazu ausgebildet ist, einen von dem Zielobjekt reflektierten Anteil des Referenzsignals als ein Messsignal zu empfangen. Das Phasendifferenzmodul ist dazu ausgebildet, eine Phasendifferenz zwischen dem Referenzsignal und dem Messsignal zu bestimmen. Das Abstandsbestimmungsmodul ist dazu ausgebildet, eine Abstandsinformation aus der Phasendifferenz zu bestimmen. Das Signalstärkenbestimmungsmodul ist dazu ausgebildet, eine Stärke des Messsignals zu bestimmen. Das Vergleichsmodul ist dazu ausgebildet, die Stärke des Messsignals mit einem vorgegebenen Schwellenwert zu vergleichen, um festzustellen, ob das Zielobjekt innerhalb eines Eindeutigkeitsbereichs der Laufzeitmessung angeordnet ist.

Bei einer derartigen Abstandsmessvorrichtung kann die Abstandsinformation insbesondere dann ausgegeben bzw. weiterverarbeitet werden, wenn festgestellt wurde, dass das Zielobjekt innerhalb des Eindeutigkeitsbereichs angeordnet und der Abstand zu dem Zielobjekt eindeutig bestimmbar ist. Alle übrigen Abstandsinformationen können verworfen werden, beispielsweise indem sie als fehlerhaft bzw. uneindeutig gekennzeichnet werden, etwa indem sie auf einen vorbestimmten, beispielsweise einen maximalen oder minimalen Abstandswert, gesetzt oder nicht ausgegeben werden. Wird die Abstandsmessvorrichtung dazu verwendet, das Eintreten eines Zielobjekts in einen innerhalb des Eindeutigkeitsbereichs angeordneten Sicherheitsbereich zu überwachen, so kann die Abstandsinformation nur in den Fällen weiterverarbeitet werden, in denen das Zielobjekt eindeutig innerhalb des Sicherheitsbereichs detektiert wurde. Der Eintritt des Zielobjekts in den Sicherheitsbereich kann eine Sicherheitsreaktion einer die Abstandsmessvorrichtung umfassenden Anlage auslösen.

Die Abstandsmessvorrichtung kann insbesondere dazu ausgebildet sein, das erfindungsgemäße Verfahren zur Bestimmung eines Abstandes zu einem Zielobjekt mittels einer Laufzeitmessung auszuführen.

Bei einer Weiterbildung ist das Vergleichsmodul dazu ausgebildet ist, den Schwellenwert in Abhängigkeit von einer maximalen Reflektivität möglicher Zielobjekte vorzugeben. Insbesondere kann der Schwellenwert derart vorgegeben werden, dass die Stärke des Messsignals dem Schwellenwert entspricht, wenn das Zielobjekt die maximale Reflektivität aufweist und an einer oberen Grenze eines Eindeutigkeitsbereichs der Laufzeitmessung angeordnet ist.

Bei einer Weiterbildung der Abstandsmessvorrichtung umfasst die Empfängereinheit ein weiteres Sensorelement, welches dazu ausgebildet ist, einen von einem weiteren Zielobjekt reflektierten weiteren Anteil des Referenzsignals als ein weiteres Messsignal zu empfangen. Das Signalstärkenbestimmungsmodul ist dabei dazu ausgebildet, eine weitere Stärke des weiteren Messsignals zu bestimmen. Das Vergleichsmodul ist dazu ausgebildet, die weitere Stärke des weiteren Messsignals mit dem vorgegebenen Schwellenwert zu vergleichen, um festzustellen, ob das weitere Zielobjekt innerhalb des Eindeutigkeitsbereichs der Laufzeitmessung angeordnet ist.

Mit einer derartigen Abstandsmessvorrichtung können der Abstand zu dem Zielobjekt und der weitere Abstand zu dem weiteren Zielobjekt gleichzeitig bestimmt werden. Gleichzeitig kann sowohl für den Abstand zu dem Zielobjekt, als auch für den weiteren Abstand zu dem weiteren Zielobjekt jeweils unabhängig voneinander festgestellt werden, ob der Abstand bzw. der weitere Abstand eindeutig bestimmbar ist bzw. ob sich das betreffende Zielobjekt innerhalb des Eindeutigkeitsbereichs der Messung befindet. Das Sensorelement und das weitere Sensorelement können insbesondere jeweils in einer ToF-Kamera angeordnet sein. Ebenso kann das Signalstärkenbestimmungsmodul in der ToF-Kamera angeordnet sein. Das Sensorelement und das weitere Sensorelement können beispielsweise als Sensorpixel einer zweidimensionalen Sensormatrix eines Bildsensors ausgebildet sein.

Bei einer Weiterbildung der Abstandsmessvorrichtung ist das Vergleichsmodul als ein Signal-Rausch-Filter ausgebildet. Bei einem derartigen Vergleichsmodul kann das Signalstärkenbestimmungsmodul insbesondere dazu ausgebildet sein, die Stärke des Messignals als ein Signal-Rausch-Verhältnis des Sensorelements der Empfängereinheit zu bestimmen.

Nachfolgend wird die Erfindung rein beispielhaft unter Bezugnahme auf Zeichnungen beschrieben. Es zeigen:
- Fig. 1: eine Abstandsmessvorrichtung;
- Fig. 2: eine Abhängigkeit einer Stärke eines Messsignals von einem Abstand für unterschiedliche Reflektivitäten eines Zielobjekts, sowie einen Schwellenwert;
- Fig. 3: eine weitere Darstellung der Abhängigkeit der Stärke des Messsignals von dem Abstand, sowie einen weiteren Schwellenwert;
- Fig. 4: ein Verfahren zur Bestimmung eines Abstandes zu einem Zielobjekt;
- Fig. 5: ein Verfahren zum Erfassen von Objekten.

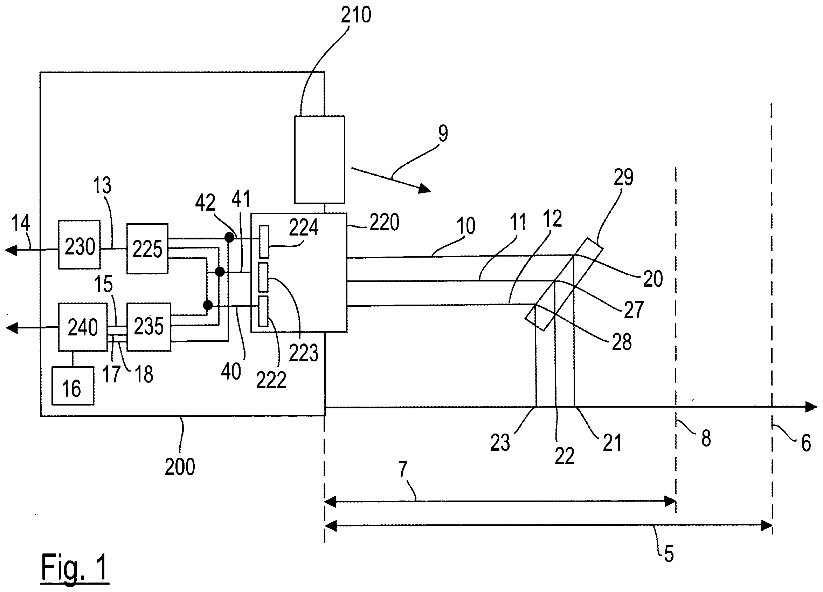

Fig. 1 zeigt eine Abstandsmessvorrichtung 200 mit einer Emittereinheit 210 und einer Empfängereinheit 220. Die Abstandsmessvorrichtung 200 ist dazu ausgebildet, einen Abstand 21 zwischen der Abstandsmessvorrichtung 200 und einem Zielobjekt 20 zu bestimmen. Bei dem Zielobjekt 20 kann es sich, wie in Fig. 1 dargestellt, um einen Teilbereich eines größeren Gesamtobjekts 29 oder um ein einzelnes Objekt handeln. Die Emittereinheit 210 ist dazu ausgebildet, das Zielobjekt 20 mit einem elektromagnetischen Referenzsignal 9 zu bestrahlen, welches insbesondere sichtbare Strahlung, etwa Laserstrahlung, Mikrowellenstrahlung oder Terrahertzstrahlung umfassen kann. Die Empfängereinheit 220 umfasst ein Sensorelement 222, welches das Messsignal 10 empfängt und in ein elektrisches Sensorsignal 40 umwandelt.

Die Empfängereinheit 220 kann neben dem Sensorelement 222 weitere Sensorelemente, insbesondere ein erstes weiteres Sensorelement 223 und ein zweites weiteres Sensorelement 224 umfassen. Die Empfängereinheit 220 kann beispielsweise einen ersten weiteren Anteil des Referenzsignals 9, der von einem ersten weiteren Zielobjekt 27 reflektiert wird, mittels des ersten weiteren Sensorelements 223 und einen zweiten weiteren Anteil des Referenzsignals 9, der von einem zweiten weiteren Zielobjekt 28 reflektiert wird, mittels des zweiten weiteren Sensorelements 224 empfangen. Das erste weitere Zielobjekt 27 und/oder das zweite weitere Zielobjekt 28 können, wie dargestellt, durch weitere Bereiche des Gesamtobjekts 29 oder durch jeweils separate Objekte gebildet werden. Analog zu dem Sensorelement 222, wandelt das erste weitere Sensorelement 223 das erste weitere Messsignal 11 in ein erstes weiteres Sensorsignal 41 und das zweite weitere Sensorelement 224 wandelt das zweite weitere Messsignal 12 in ein zweites weiteres Sensorsignal 42 um.

Die Abstandsmessvorrichtung 200 ist dazu ausgebildet, ausgehend von einer Referenzebene der Abstandsmessvorrichtung 200 einen Abstand 21 zu dem Zielobjekt 20 aus dem Messsignal 10, einen ersten weiteren Abstand 22 zu dem ersten weiteren Zielobjekt 27 aus dem ersten weiteren Messsignal 11 und einen zweiten weiteren Abstand 23 zu dem zweiten weiteren Zielobjekt 28 aus dem zweiten weiteren Messsignal 12 zu bestimmen. Die Abstandsmessvorrichtung 200 ist dazu ausgebildet, die Abstände 21, 22, 23 mittels einer Laufzeitmessung (Time-of-Flight-(ToF)-Messung) und aus einer Phasendifferenz zwischen dem Referenzsignal 9 und den Messsignalen 10, 11, 12 zu bestimmen. Hierzu kann die Abstandsmessvorrichtung 200 die elektromagnetische Strahlung des Referenzsignals 9 periodisch, insbesondere harmonisch, modulieren. Die Abstandsmessvorrichtung 200 umfasst ein Phasendifferenzmodul 225, welches dazu ausgebildet ist, eine Phasendifferenz 13 zwischen dem Referenzsignal 9 und dem Messsignal 10 aus dem Sensorsignal 40, eine erste weitere Phasendifferenz zwischen dem ersten weiteren Messsignal 11 und dem Referenzsignal 9 aus dem ersten weiteren Sensorsignal 41, sowie eine zweite weitere Phasendifferenz zwischen dem zweiten weiteren Messsignal 12 und dem Referenzsignal 9 aus dem zweiten weiteren Sensorsignal 42 zu bestimmen.

Die Abstandsmessvorrichtung 200 umfasst ein Abstandsbestimmungsmodul 230, welches aus der Phasendifferenz 13 eine Abstandsinformation 14 bestimmt, die den Abstand 21 des Zielobjekts 20 von der Abstandsmessvorrichtung 200 repräsentiert. Außerdem ist das Abstandsbestimmungsmodul 230 dazu ausgebildet, aus der ersten weiteren Phasendifferenz eine erste weitere Abstandsinformation, welche den ersten weiteren Abstand 22 repräsentiert, und aus der zweiten weiteren Phasendifferenz eine zweite weitere Abstandsinformation, welche den zweiten weiteren Abstand 23 repräsentiert, zu bestimmen.

Die Abstandsmessvorrichtung 200 umfasst ein Signalstärkenbestimmungsmodul 235, welches dazu ausgebildet ist, eine Stärke 15 des Messsignals 10 aus dem Sensorsignal 40, eine erste weitere Stärke des ersten weiteren Messsignals 11 aus dem ersten weiteren Sensorsignal 41, sowie eine zweite weitere Stärke des zweiten weiteren Messsignals 12 aus dem zweiten weiteren Sensorsignal 42 zu bestimmen.

Das Signalstärkenbestimmungsmodul 235 kann die Stärke 15 des Messsignals 10, die erste weitere Stärke des ersten weiteren Messsignals 11 und die zweite weitere Stärke des zweiten weiteren Messsignals 12 als eine die Energie der Messsignale 10, 11, 12, insbesondere als eine die Intensität der Messsignale 10, 11, 12 repräsentierende Größe, etwa als Signal-Rausch-Verhältnisse der Sensorelemente 222, 223, 224 bestimmen. Die Signal-Rausch-Verhältnisse ergeben sich dabei aus den Verhältnissen der Stärken der Sensorsignale 40, 41, 42 bei Beleuchtung der Zielobjekte 20, 27, 28 mit dem Referenzsignal 9 und der Stärken der Sensorsignale 40, 41, 42 in Abwesenheit des Referenzsignals 9.

Die Abstandsmessvorrichtung 200 umfasst ein Vergleichsmodul 240, das dazu ausgebildet ist, die Stärke 15 des Messsignals 10 mit einem vorgegebenen Schwellenwert 16 zu vergleichen, um festzustellen, ob der Abstand 21 zu dem Zielobjekt 20 eindeutig bestimmbar ist. Außerdem vergleicht das Vergleichsmodul 240 die Stärken der weiteren Messsignale 11, 12 mit dem Schwellenwert 16, um jeweils festzustellen, ob die Abstände 21, 22 eindeutig bestimmbar sind.

Im Folgenden wird die Bestimmung der Abstände 21, 22, 23 der Zielobjekte 10, 27, 28 beispielhaft anhand des Messsignals 10 dargestellt. Für das erste weitere Messsignal 11 und das zweite weitere Messsignal 12 wird das beschriebene Verfahren in analoger Weise ausgeführt.

Da die Phasendifferenz 13 zwischen dem Messsignal 10 und dem Referenzsignal 9 grundsätzlich nur modulo 360° bestimmt werden kann, können aus der Phasendifferenz 13 auch nur Abstände 21 des Zielobjekts 20 abgeleitet werden, die kleiner sind als eine obere Grenze 6 eines Eindeutigkeitsbereichs 5 der Laufzeitmessung. Insofern ist der Abstand 21 zu dem Zielobjekt 20 nur dann eindeutig bestimmbar, wenn das Zielobjekt 20 innerhalb des Eindeutigkeitsbereichs 5 angeordnet ist. Das Vergleichsmodul 240 ist dazu ausgebildet, für jedes Sensorelement 222, 223, 224 anzuzeigen, ob der durch das betreffende Sensorelement 222, 223, 224 bestimmte Abstand 21, 22, 23 eindeutig bestimmbar ist bzw. ob das zugehörige Zielobjekt 20, 27, 28 innerhalb des Eindeutigkeitsbereichs 5 angeordnet ist.

Die Abstandsmessvorrichtung 200 kann zur Überwachung eines innerhalb des Eindeutigkeitsbereichs 5 angeordneten Arbeitsbereichs 7 eingesetzt werden, wobei der Arbeitsbereich 7 oder ein Teilbereich des Arbeitsbereichs 7 insbesondere einen Sicherheitsbereich bilden kann. Die Abstandsinformation 14 kann dazu verwendet werden, ein Eintreten des Zielobjekts 20 in den Arbeitsbereich 7 bzw. den Sicherheitsbereich zu detektieren.

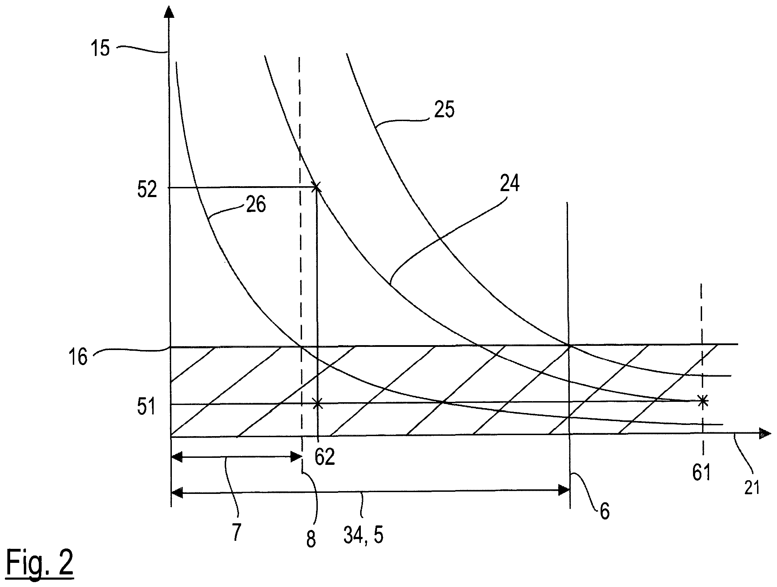

Fig. 2 zeigt die Abhängigkeit der Stärke 15 des Messsignals 10 von dem Abstand 21 zu dem Zielobjekt 20 für verschiedene Reflektivitäten 24, 25, 26 des Zielobjekts 20. Im Falle diffuser Reflexion an dem Zielobjekt 20, können die Reflektivitäten 24, 25, 26 auch jeweils als Remission bezeichnet werden. In Fig. 2 ist eine reziprok quadratische Abhängigkeit der Stärke 15 des Messsignals 10 von dem Abstand 21 dargestellt. In Fig. 2 ist außerdem eine Ausdehnung 34 des Eindeutigkeitsbereichs 5 dargestellt, welche der Entfernung zwischen der Referenzebene der Abstandsmessvorrichtung 200 und der oberen Grenze 6 des Eindeutigkeitsbereichs 5 entspricht.

Ist das Zielobjekt in einem ersten Abstand 61 angeordnet, der der Summe aus der Ausdehnung 34 des Eindeutigkeitsbereichs 5 und einem innerhalb des Eindeutigkeitsbereichs 5 angeordneten zweiten Abstand 62 entspricht, entspricht die aus der Phasendifferenz 13 erzeugte Abstandsinformation 14 derjenigen Abstandsinformation 14, die erzeugt wird, wenn das Zielobjekt 20 in dem zweiten Abstand 62 angeordnet ist. Wie in Fig. 2 dargestellt ist, variiert jedoch die Stärke 15 des Messsignals 10 bei einer gleichbleibenden Reflektivität 24 des Zielobjekts 20 je nachdem, ob das Zielobjekt 20 in dem ersten Abstand 61 oder in dem zweiten Abstand 62 angeordnet ist. Bei dem in dem ersten Abstand 61 angeordneten Zielobjekt 20 weist das Messsignal 10 eine erste Stärke 51 auf, während das Messsignal 10 bei dem in dem zweiten Abstand 62 angeordneten Messobjekt 10 eine zweite Stärke 52 aufweist. Die erste Stärke 51 ist dabei kleiner als die zweite Stärke 52. Damit kann anhand der Stärken 51, 52 unterschieden werden, ob das Zielobjekt 10 in dem ersten Abstand 61 oder in dem zweiten Abstand 62 angeordnet ist.

Weisen alle möglichen Zielobjekte 20 höchstens eine maximale Reflektivität 25 auf, so entspricht die Stärke 15 des Messsignals 10, die das Zielobjekt 20 bei maximaler Reflektivität 25 erzeugt, wenn es an der oberen Grenze 6 des Eindeutigkeitsbereichs 5 angeordnet ist, einer Obergrenze für die Stärke 15 des Messsignals 10 für all diejenigen Fälle, in denen das Zielobjekt 20 außerhalb des Eindeutigkeitsbereichs angeordnet ist. Der Schwellenwert 16 kann daher derart vorgegeben werden, dass die Stärke 15 des Messsignals 10 dem Schwellenwert 16 entspricht, wenn das Zielobjekt 20 die maximale Reflektivität aufweist und an der oberen Grenze 6 des Eindeutigkeitsbereichs 5 angeordnet ist.

Ein die Abstandsmessvorrichtung 200 umfassendes Abstandsbestimmungssystem kann beispielsweise nur diejenigen Messsignale 10 zur Bestimmung des Abstandes 21 heranziehen, deren Stärke 15 oberhalb des Schwellenwerts 16 liegt. In diesem Fall kann das Vergleichsmodul 240 beispielsweise als ein Filter ausgebildet sein, welcher die Sensorsignale 40 aller Messsignale 10 ausfiltert, deren Stärke 15 kleiner oder gleich dem Schwellenwert 16 ist.

Kann das Zielobjekt 20 eine Reflektivität aufweisen, die kleiner ist als die maximale Reflektivität 25, so kann die Stärke 15 des Messsignals 10 bereits dann unter dem Schwellenwert 16 liegen, wenn der Abstand 21 des Zielobjekts 20 kleiner ist als die obere Grenze 6 des Eindeutigkeitsbereichs 5. Dies kann zur Folge haben, dass das entsprechende Messsignal 10 als nicht eindeutig bestimmbar verworfen wird und das zugehörige Zielobjekt 20 nicht detektiert wird, obwohl es sich innerhalb des Eindeutigkeitsbereichs 5 befindet.

Der Arbeitsbereich 7 kann daher insbesondere derart festgelegt sein, dass die Stärke 15 des Messsignals 10 größer ist als der Schwellenwert 16, solange das Zielobjekt 10 innerhalb des Arbeitsbereichs 7 angeordnet ist und solange die Reflektivität des Zielobjekts 10 mindestens einer minimalen Reflektivität 26 möglicher Zielobjekte 20 entspricht. Insbesondere kann ein maximaler Arbeitsabstand 8, der eine obere Grenze des Arbeitsbereichs 7 definiert, derart vorgegeben sein, dass die Stärke 15 des Messsignals 10 mindestens, insbesondere genau, dem Schwellenwert 16 entspricht, wenn das Zielobjekt 20 in dem maximalen Arbeitsabstand 8 angeordnet ist und wenn das Zielobjekt 20 die minimale Reflektivität 26 möglicher Zielobjekte 20 aufweist.

Die maximale Reflektivität 25 kann beispielsweise zwischen 70% und 100%, insbesondere zwischen 85% und 95% betragen. Die minimale Reflektivität 26 kann beispielsweise zwischen 1% und 30%, beispielsweise zwischen 5% und 20%, insbesondere zwischen 7,5 und 15% betragen. Die durch den Eindeutigkeitsabstand definierte obere Grenze 6 des Eindeutigkeitsbereichs 5 kann beispielsweise in einem Abstand zwischen 3 m und 5 m, insbesondere in einem Abstand zwischen 3,5 m und 4,25 m, angeordnet sein. Der maximale Arbeitsabstand 8 kann beispielsweise in einem Abstand zwischen 0,5 m und 2 m, insbesondere in einem Abstand zwischen 1 m und 1,5 m angeordnet sein. Beispielsweise kann die obere Grenze 6 in einem Abstand von 3,75 m angeordnet sein, die maximale Reflektivität kann 90% betragen und die minimale Reflektivität kann 10% betragen. Bei einer reziprok quadratischen Abstandsabhängigkeit der Stärke 15 des Messsignals 10 vom Abstand 21 wäre der Schwellenwert 16 in diesem Fall bei 6,4% pro m² angeordnet und der maximale Arbeitsabstand wäre 1,25 m.

Indem der Schwellenwert 16, wie in Fig. 2 dargestellt, derart gewählt wird, dass die Stärke 15 des Messsignals 10 dem Schwellenwert 16 entspricht, wenn das Zielobjekt 20 die maximale Reflektivität 25 aufweist und an der oberen Grenze 6 des Eindeutigkeitsbereichs 5 angeordnet ist, kann ausgeschlossen werden, dass ein Zielobjekt 20 außerhalb des Eindeutigkeitsbereichs 5 ein Messsignal 10 erzeugt, dessen Stärke 15 und dessen Phasendifferenz 13 einem Messsignal 10 entsprechen, das von einem Zielobjekt 20 erzeugt wird, welches in einem um die Ausdehnung 34 des Eindeutigkeitsbereichs 5 reduzierten Abstand 21 angeordnet ist.

Die Abstandsmessvorrichtung 200 kann dazu ausgebildet sein, den vorgegebenen Schwellenwert 16 in Abhängigkeit von einer Stärke des elektromagnetischen Referenzsignals 9 und/oder in Abhängigkeit von der Modulationsfrequenz des elektromagnetischen Referenzsignals 9 auszuwählen. Der Schwellenwert 16 kann auch in Abhängigkeit von der maximalen Reflektivität 25 möglicher Zielobjekte 20 vorgegeben sein.

Die Module 225, 230, 235, 240 der Abstandsmessvorrichtung 200 können jeweils als Softwaremodule einer Verarbeitungseinheit der Abstandsmessvorrichtung 200 ausgebildet sein. Die Module 225, 230, 235, 240 können auch auf unterschiedliche Verarbeitungseinheiten aufgeteilt sein. Insbesondere können das Phasendifferenzmodul 225 und das Signalstärkenbestimmungsmodul 235 als Bestandteile einer die Sensorelemente 222, 223, 224 umfassenden ToF-Kamera ausgebildet sein. Außerdem kann auch das Abstandsbestimmungsmodul 230 als Modul einer derartigen ToF-Kamera ausgebildet sein. Das Vergleichsmodul 240 kann als ein Modul, insbesondere als ein Softwaremodul, einer weiteren Verarbeitungseinheit der Abstandsmessvorrichtung 200 ausgeführt sein. Die Verarbeitungseinheiten können als Logikbausteine, beispielsweise als Mikrocontroller oder als FPGA (Field Programmable Gate Array) ausgebildet sein.

Sind die maximale Reflektivität 25 und die minimale Reflektivität 26 möglicher Zielobjekte 20 bekannt, so kann der Arbeitsbereich 7 dadurch vergrößert werden, dass der Schwellenwert 16 nicht statisch, sondern in Abhängigkeit von der durch das Phasendifferenzmodul 225 bestimmten Phasendifferenz 13 oder in Abhängigkeit von der durch das Abstandsbestimmungsmodul 230 bestimmten Abstandsinformation 14 vorgegeben wird. Der Schwellenwert 16 wird dabei derart vorgegeben, dass ein innerhalb des Arbeitsbereichs 7 angeordnetes Zielobjekt 20 mit minimaler Reflektivität 26 stets ein Messsignal 10 erzeugt, dessen Stärke 15 größer ist, als die Stärke 15 eines Messsignals 10, das ein Zielobjekt 20 mit maximaler Reflektivität 25 erzeugt, welches in einem um die Ausdehnung 34 des Eindeutigkeitsbereichs 5 vergrößerten Abstand 21 angeordnet ist.

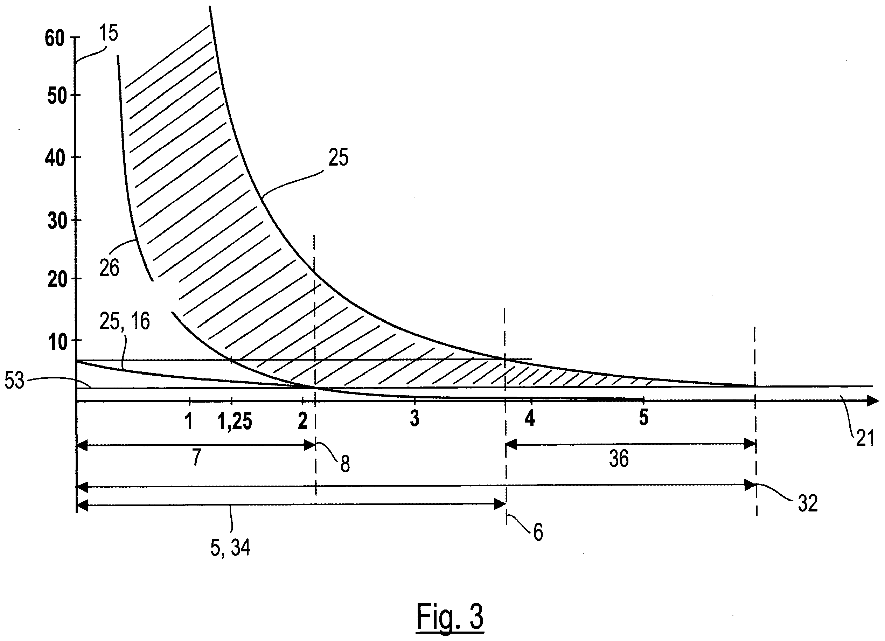

Eine derartige Wahl des Schwellenwerts 16 wird im Folgenden anhand von Fig. 3 erläutert. In Fig. 3 ist, wie in Fig. 2, die Stärke 15 des Messsignals 10 in Abhängigkeit von dem Abstand 21 zu dem Zielobjekt 20 für die maximale Reflektivität 25 und für die minimale Reflektivität 26 möglicher Zielobjekte 20 dargestellt. Für Abstände 21, die größer sind als die obere Grenze 6 des Eindeutigkeitsbereichs 5, ist die Stärke 15 des Messsignals 10 bei maximaler Reflektivität 25 des Zielobjekts 20 ausgehend von der Ordinate der Darstellung nochmals für einen um die Ausdehnung 34 des Eindeutigkeitsbereichs 5 reduzierten Abstand 21 dargestellt. Dieser reduzierte Abstand 21 entspricht dem aus der Phasendifferenz 13 bestimmbaren und von der Abstandsinformation 14 repräsentierten Abstand 21, welcher lediglich modulo der Ausdehnung 34 des Eindeutigkeitsbereichs 5 angegeben werden kann.

Der Arbeitsbereich 7 kann nun als ein erweiterter Arbeitsbereich 7 derart gewählt werden, dass er sich bis zu einem erweiterten maximalen Arbeitsabstand 8 erstreckt. Der erweiterte maximale Arbeitsabstand 8 ist derart gewählt, dass die Stärke 15 des Messsignals 10 einem Grenzwert 53 zum einen dann entspricht, wenn das Zielobjekt 20 die minimale Reflektivität 26 aufweist und in dem maximalen Arbeitsabstand 8 angeordnet ist, und die Stärke 15 des Messsignals 10 dem Grenzwert 53 zum anderen dann entspricht, wenn das Zielobjekt 20 die maximale Reflektivität 25 möglicher Zielobjekte 20 aufweist und in einem Grenzabstand 32 angeordnet ist, wobei der Grenzabstand 32 dem maximalen Arbeitsabstand 8 zuzüglich der Ausdehnung 34 des Eindeutigkeitsbereichs 5 entspricht. Für Abstände 21, die kleiner sind als der maximale Arbeitsabstand 8, ist die Stärke 15 des Messsignals 10, das von einem Zielobjekt 20 mit der minimalen Reflektivität 26 erzeugt wird, stets größer als die Stärke 15 des Messsignals 10, das von einem Zielobjekt 20 mit maximaler Reflektivität 25 erzeugt wird, wenn das Zielobjekt 20 maximaler Reflektivität 25 in einem Abstand 21 angeordnet ist, der dem um die Ausdehnung 34 des Eindeutigkeitsbereichs 5 vergrößerten Abstand 21 des Zielobjekts 20 mit minimaler Reflektivität 26 entspricht.

Der Schwellenwert 16 wird nun für jede Phasendifferenz 13 und damit für jeden Abstand 21 derart vorgegeben, dass die Stärke 15 des Messsignals 10 größer ist als der Schwellenwert 16, wenn die Reflektivität des Zielobjekts 20 größer als die minimale Reflektivität 26 ist und dass die Stärke 15 des Messsignals 10 kleiner als der Schwellenwert 16 ist, wenn die Reflektivität des Zielobjekts 20 kleiner als die maximale Reflektivität 25 ist. Mit anderen Worten wird der Schwellenwert 16 derart vorgegeben, dass er innerhalb des Arbeitsbereichs 7 stets zwischen der um die Ausdehnung 34 des Eindeutigkeitsbereichs 5 in Richtung der Ordinate verschobenen Kurve der Stärke 15 des Messsignals 10 bei maximaler Reflektivität 25 und der Kurve der Stärke 15 des Messsignals 10 bei minimaler Reflektivität 26 liegt.

Insbesondere kann der Schwellenwert 16 derart gewählt werden, dass er für alle Abstände 21 innerhalb des Arbeitsbereichs 7 der Stärke 15 desjenigen Messsignals 10 entspricht, welches das Zielobjekt 20 mit maximaler Reflektivität 25 erzeugt, wenn das Zielobjekt 20 mit maximaler Reflektivität 25 in dem betreffenden Abstand 21 zuzüglich der Ausdehnung 34 des Eindeutigkeitsbereichs 5 angeordnet ist. Das Zielobjekt wird in diesem Fall lediglich dann als in dem Arbeitsbereich 7 bzw. innerhalb des Eindeutigkeitsbereichs 5 angeordnet detektiert, wenn die Stärke 15 des durch das Zielobjekt 20 erzeugten Messsignals 10 größer ist als der Schwellenwert 16.

Wird durch die Abstandsmessvorrichtung 210 ein innerhalb des Arbeitsbereichs 7 angeordneter Sicherheitsbereich überwacht, so werden auch bei der in Fig. 3 dargestellten abstandsabhängigen Vorgabe des Schwellenwerts 16 zuverlässig alle Zielobjekte 20 erfasst, deren Reflektivität mindestens der minimalen Reflektivität 26 entspricht. Gegenüber der in Fig. 2 dargestellten abstandsunabhängigen Vorgabe des Schwellenwerts 16 erhöht sich die Anzahl von Fehldetektionen bei der in Fig. 3 dargestellten abstandsabhängigen Vorgabe des Schwellenwerts 16 nicht. Dies folgt daraus, dass auch bei der in Fig. 3 dargestellten Vorgabe des Schwellenwerts 16 für alle Zielobjekte 20, deren Reflektivität höchstens der maximalen Reflektivität 25 entspricht, anhand des Vergleichs mit dem Schwellenwert 16 festgestellt werden kann, ob die betreffenden Zielobjekte 20 außerhalb des Eindeutigkeitsbereichs 5 angeordnet sind. Fehldetektionen, bei denen außerhalb des Eindeutigkeitsbereichs 5 bzw. des Arbeitsbereichs 7 angeordnete Zielobjekte 20 fälschlicherweise als innerhalb des Eindeutigkeitsbereichs 5 angeordnet detektiert werden, könnten höchstens von Zielobjekten 20 verursacht werden, deren Reflektivität größer ist als die maximale Reflektivität 25. Derartige Zielobjekte 20 können aber auch bei der abstandsunabhängigen Vorgabe des Schwellenwerts 16, wie sie in Fig. 2 dargestellt wird, nicht vermieden werden.

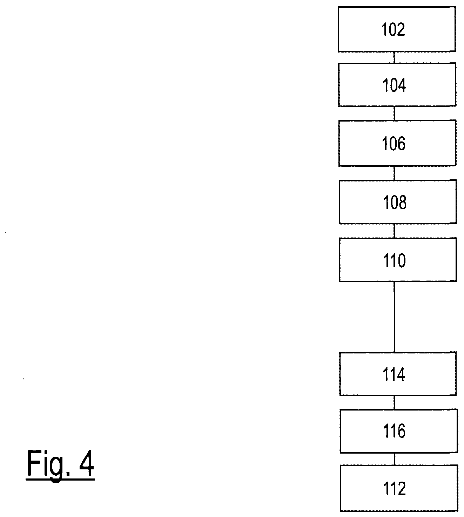

In Fig. 4 ist ein Verfahren 100 zur Bestimmung des Abstands 21 zu dem Zielobjekt 20 mittels der Laufzeitmessung dargestellt, wie es von der Abstandmessvorrichtung 200 ausgeführt wird. Ein erster Verfahrensschritt umfasst ein Bestrahlen 102 des Zielobjekts 20 mit dem elektromagnetischen Referenzsignal 9. Ein zweiter Verfahrensschritt umfasst ein Empfangen 104 des von dem Zielobjekt 20 reflektierten Anteils des Referenzsignals 9 als das Messsignal 10. Ein dritter Verfahrensschritt umfasst ein Bestimmen 106 der Phasendifferenz 13 zwischen dem Referenzsignal 9 und dem Messsignal 10. Ein vierter Verfahrensschritt umfasst ein Bestimmen 108 der Abstandsinformation 14 aus der Phasendifferenz 13.

Ein fünfter Verfahrensschritt umfasst ein Bestimmen 110 der Stärke 15 des Messsignals 10. Ein sechster optionaler Verfahrensschritt umfasst eine Auswahl 114 des vorgegebenen Schwellenwerts 16 in Abhängigkeit von der Stärke des elektromagnetischen Referenzsignals 9. Ein siebter, ebenfalls optionaler, Verfahrensschritt umfasst eine Auswahl 116 des vorgegebenen Schwellenwerts 16 in Abhängigkeit von der Modulationsfrequenz des elektromagnetischen Referenzsignals 9.

Ein achter Verfahrensschritt umfasst ein Vergleichen 112 der Stärke 15 des Messsignals 10 mit dem vorgegebenen Schwellenwert 16, um festzustellen, ob das Zielobjekt 20 innerhalb des Eindeutigkeitsbereichs 5 der Laufzeitmessung angeordnet ist.

Die Verfahrensschritte des Verfahrens 100 können in der in Fig. 4 dargestellten Reihenfolge durchgeführt werden. Alternativ können die Verfahrensschritte des Verfahrens 100 auch in anderer Reihenfolge durchgeführt werden. Insbesondere kann das Bestimmen 110 der Stärke 15 des Messsignals 10 und/oder das Vergleichen 112 der Stärke 15 des Messsignals 10 mit dem vorgegebenen Schwellenwert 16 auch vor oder während dem Bestimmen 106 der Phasendifferenz 13 und/oder dem Ermitteln 108 der Abstandsinformation 14 durchgeführt werden.

Das Verfahren 100 zur Bestimmung des Abstands 21 des Zielobjekts 20 kann insbesondere für jeden Bildpunkt eines optischen Sensors, beispielsweise für jeden Bildpunkt eines optischen Sensors einer 3D-Kamera, etwa einer ToF-Kamera, durchgeführt werden. Dabei bilden die in Fig. 1 dargestellten Sensorelemente 222, 223, 224 jeweils einen der Bildpunkte des optischen Sensors. Die Bildpunkte können aktive Pixel sein, die jeweils eines der Sensorelemente 222, 223, 224 und diejenige Komponente des Signalstärkenbestimmungsmoduls 235 umfassen, die die Stärke 15 des auf den betreffenden Pixel treffenden Messsignals 10, 11, 12 ermittelt und als energetische Größe, beispielsweise als S/N-Verhältnis, ausgibt. Wird durch den Vergleich der Stärken der Messsignale 10, 11, 12 mit dem Schwellenwert 16 festgestellt, dass das betreffende Messsignal 10, 11, 12 durch ein außerhalb des Eindeutigkeitsbereichs 5 angeordnetes Zielobjekt 20, 27, 28 erzeugt wurde, so kann die für das betreffende Sensorelement 222, 223, 224 erzeugte Abstandsinformation 14 verworfen, beispielsweise auf einen Maximalwert gesetzt, werden.

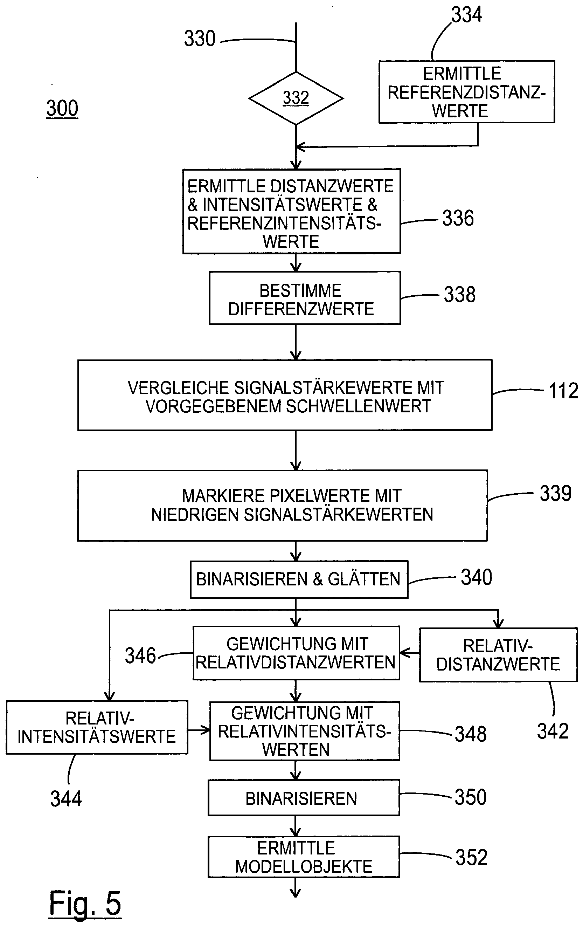

Die so korrigierten Sensordaten des optischen Sensors können in einem Verfahren zur Erfassung von Objekten verwendet werden, insbesondere indem aus den Sensordaten Objekte, vorzugsweise binäre Datenobjekte, etwa BLOBs (binary large objects), erzeugt werden. Ein derartiges Verfahren 300 zur Erfassung von Objekten ist in Fig. 5 dargestellt und wird in der europäischen Patentanmeldung 18209852.5 vom 3. Dezember 2018 ausführlich beschrieben. Der Offenbarungsgehalt der europäischen Patentanmeldung 18209852.5 wird vollumfänglich in die vorliegende Beschreibung einbezogen.

Das Verfahren 300 beginnt bei der Bezugsziffer 330. Im Entscheidungspunkt 332 wird überprüft, ob Referenzdistanzwerte vorliegen oder nicht. Die Referenzdistanzwerte umfassen einen Referenzdistanzwert für jeden Bildpunkt des optischen Sensors. Sofern Referenzdistanzwerte nicht vorliegen, werden diese in Schritt 334 ermittelt. Die Referenzdistanzwerte können für jeden Bildpunkt des Sensors als die Abstandsinformation 14 ermittelt werden, wie es im Zusammenhang mit den Figuren 1 und 4 beschrieben wird. Die Referenzdistanzwerte werden vorzugsweise unter einer Referenzerfassungsbedingung ermittelt, wobei sichergestellt wird, dass sich keine Zielobjekte 20, beispielsweise keine dynamischen Objekte, in einem durch den Arbeitsbereich 7 der Abstandsmessvorrichtung 200 gebildeten Erfassungsbereich des Sensors befinden. Außerdem wird der Erfassungsbereich unter der Referenzerfassungsbedingung während der Erfassung der Referenzdistanzwerte durch die Emittereinheit 210 mit dem Referenzsignal 9 beleuchtet.

Sofern im Entscheidungspunkt 332 festgestellt wird, dass die Referenzdistanzwerte bereits vorliegen, wird direkt mit Schritt 336 fortgefahren. In Schritt 336 werden allgemein Objekterfassungsdaten sowie weitere Referenzerfassungsdaten (zusätzlich zu den Referenzdistanzwerten) bestimmt. Insbesondere werden in Schritt 336 für jeden Bildpunkt des Sensors ein Distanzwert, ein Intensitätswert sowie ein Referenzintensitätswert ermittelt. Die Objekterfassungsdaten umfassen die Intensitätswerte und die Distanzwerte und die Referenzerfassungsdaten umfassen die Referenzdistanzwerte und die Referenzintensitätswerte.

Für jeden Bildpunkt des Sensors wird der Distanzwert als die Abstandsinformation 14 ermittelt, wie es im Zusammenhang mit den Figuren 1 und 4 beschrieben wird. Für jeden Bildpunkt des Sensors repräsentieren der Intensitätswert und der Referenzintensitätswert jeweils eine Intensität des auf den betreffenden Bildpunkt einfallenden Messsignals, insbesondere die Intensitäten der auf die Sensorelemente 222, 223, 224 einfallenden Messsignale 10, 11, 12. Dabei werden die Intensitätswerte ermittelt, während das Referenzsignal 9 in den Erfassungsbereich eingestrahlt wird und auch die Distanzwerte bestimmt werden. Die Referenzintensitätswerte werden dagegen bestimmt, während kein Referenzsignal 9 in den Erfassungsbereich eingestrahlt wird. Die Referenzintensitätswerte werden vorzugsweise in regelmäßigen zeitlichen Abständen ermittelt, insbesondere kurz vor oder nach dem Bestimmen der Distanzwerte und der Intensitätswerte. Es können während des Bestimmens der Referenzintensitätswerte auch Objekte in dem Erfassungsbereich vorhanden sein.

In Schritt 338 werden sodann Differenzwerte bestimmt, die jeweils für einen Bildpunkt eine Differenz zwischen dem Distanzwert und dem Referenzdistanzwert repräsentieren und dementsprechend auch als Differenzdistanzwerte bezeichnet werden können. Außerdem können in Schritt 338 für jeden Bildpunkt Relativintensitätswerte bestimmt werden, die jeweils eine Relation zwischen den Intensitätswerten der einzelnen Bildpunkte und den Referenzintensitätswerten der betreffenden Bildpunkte repräsentieren. Die Relativintensitätswerte werden vorzugsweise jeweils durch einen Quotienten aus dem Intensitätswert und dem Referenzintensitätswert des betreffenden Bildpunkts gebildet. Die Relativintensitätswerte repräsentieren das Signal-zu-Rausch-Verhältnis (SNR) der Messsignale der einzelnen Bildpunkte des optischen Sensors.

Im Anschluss an Schritt 338 liegen damit für jeden Bildpunkt des optischen Sensors ein Distanzwert bzw. ein Differenzdistanzwert und Intensitätswert bzw. ein Relativintensitätswert vor. Die Stärken 15, 17, 18 der Messsignale 10, 11, 12 der einzelnen Bildpunkte werden jeweils durch den Intensitätswert oder den Relativintensitätswert des betreffenden Bildpunkt gebildet. Der Intensitätswert oder der Relativintensitätswert können auch als ein Signalstärkewert des betreffenden Bildpunkt bezeichnet werden.

Das Verfahren 300 umfasst nach dem Schritt 338 das Vergleichen 112 der Signalstärkewerte mit dem vorgegebenen Schwellenwert 16. Insbesondere werden bei dem Vergleichen 112 die Stärken 15, 17, 18 der Messsignale 10, 11, 12 aller Bildpunkte des Bildsensors mit dem Schwellenwert 16 verglichen. Dabei wird, wie es im Zusammenhang mit den Figuren 2 und 3 beschrieben wird, für jeden Bildpunkt des Bildsensors bestimmt, ob das Zielobjekt 20, 27, 28 des betreffenden Bildsensors innerhalb des Eindeutigkeitsbereichs 5 der Laufzeitmessung angeordnet ist.

Nach dem Vergleichen 112 umfasst das Verfahren 300 ein Markieren 339 derjenigen Pixelwerte der Bildpunkte des Sensors, deren Signalstärkewerte höchstens dem Schwellenwert 16 entsprechen. Dabei können beispielsweise die Distanzwerte und/oder die Differenzdistanzwerte der betreffenden Bildpunkte auf einen maximalen Distanzwert gesetzt werden. Insbesondere werden die Distanzwerte und/oder die Differenzdistanzwerte der betreffenden Bildpunkte auf einen Distanzwert gesetzt, der größer oder gleich dem maximalen Arbeitsabstand 8 und/oder der größer oder gleich der Ausdehnung des Erfassungsbereichs des Sensors ist. Die so markierten Distanzwert bzw. Differenzdistanzwerte bilden eindeutige Distanzwert bzw. eindeutige Differenzdistanzwerte. Dadurch kann sichergestellt werden, dass Pixelwerte, deren Signalstärkewerte unter dem Schwellenwert 16 liegen, in nachfolgenden Verarbeitungsschritten Objekte erzeugen, die fälschlicherweise als innerhalb des Eindeutigkeitsbereichs 5 bzw. innerhalb des Arbeitsbereichs 7 oder des Erfassungsbereichs des Sensors angeordnet erkannt werden.

In Schritt 340 werden die Differenzwerte einem ersten Schwellenwertfilter und einem Glättungsfilter unterzogen. Das erste Schwellenwertfilter ist vorzugsweise dazu ausgelegt, die Differenzwerte zu binarisieren. Auf der Grundlage der Differenzwerte werden die Relativdistanzwerte (Schritt 342) sowie die Relativintensitätswerte (Schritt 344) bereitgestellt. Anstelle der durch Schritt 340 gefilterten Differenzwerte können auch die ungefilterten Differenzwerte verwendet werden. Die Relativdistanzwerte können als Relativdifferenzdistanzwerte ermittelt worden sein, indem jeweils ein Quotient oder die Differenz zwischen den Differenzwerten und den Referenzdistanzwerten berechnet wird.

In Schritt 346 werden die ungefilterten Differenzwerte mit den Relativdistanzwerten aus Schritt 342 gewichtet, insbesondere multipliziert. In Schritt 348 werden die Differenzwerte zusätzlich mit den Relativintensitätswerten gewichtet, insbesondere multipliziert. Sodann werden die Differenzwerte durch ein zweites Schwellenwertfilter in Schritt 350 binarisiert. Auf der Grundlage der erhaltenen Differenzwerte werden sodann Modellobjekte in Schritt 352 ermittelt, insbesondere unter Verwendung eines Segmentierungsverfahrens auf der Grundlage der Differenzwerte.

Die Modellobjekte werden auf der Grundlage der eindeutigen Differenzwerte ermittelt, bei denen Differenzwerte, deren zugehöriger Signalstärkewert kleiner als der Schwellenwert 16 ist, markiert sind. Dabei sind die Differenzwerte zu einer Karte (d.h. einem ortsaufgelösten Bild) zusammengefasst, die den Erfassungsbereich repräsentiert. Die Karte kann dann einer Clusteranalyse, bevorzugt einem Bildsegmentierungsverfahren unterzogen werden, um das jeweilige Modellobjekt zu ermitteln. Da der Ermittlung von Modellobjekten hierbei Differenzwerte zugrunde gelegt werden, die neben der zweidimensionalen Karte als dritte Dimension Distanzwerte repräsentieren, kann ein jeweiliges Modellobjekt allgemein dreidimensional definiert sein. Die Modellobjekte können beispielsweise als Quader ausgebildet sein.

Ein jeweiliger Differenzwert kann auf der Grundlage des zugehörigen Distanzwerts und vordefinierter Kameraparameter (z.B. Einstellwinkel der 3D-Kamera und Anbauhöhe) in einen Raumpunkt umgerechnet werden, der insbesondere die Position des Reflexionspunkts bei der Ermittlung des Distanzwerts angibt.

Im Zuge der Ermittlung des jeweiligen Modellobjekts werden die zugrundeliegenden Differenzwerte vorzugsweise binär dahingehend ausgewertet, ob ein betreffender Differenzwert von einem Objekt verursacht worden ist, oder nicht. Sofern ein Differenzwert als von einem Objekt verursacht klassifiziert wird, wird dieser Differenzwert geometrisch regelmäßig innerhalb des Modellobjekts liegen und somit dem Modellobjekt zugeordnet. Das finale Modellobjekt wird dann einen Cluster von Differenzwerten beinhalten, die von dem Modellobjekt umgeben sind. Einzelne Differenzwerte können geometrisch gesehen aber auch außerhalb eines Modellobjekts liegen. Das Modellobjekt kann in tatsächliche Raumgrößen umgerechnet werden, so dass die Größenparameter des Modellobjekts zumindest annähernd mit den Größen des Objekts korrespondieren. Die dem Modellobjekt zugeordneten Differenzwerte können wie erwähnt in Raumpunkte umgerechnet werden, die zumindest überwiegend innerhalb des Modellobjekts liegen.

Das Verfahren 300 ist vorzugsweise als sogenannter "one-pass"-Algorithmus implementiert, wobei die Daten des optischen Sensors vorzugsweise genau einmal eingelesen und unter Verwendung einer minimalen Anzahl von Speichervorgängen verarbeitet werden. Ferner ist das Verfahren 300 vorzugsweise unter Verwendung eines field programmable gate arrays (FPGA) implementiert.

Die Erfindung bezieht sich ferner auf ein autonomes Fahrzeug mit einem optischen Sensor, der insbesondere dem vorstehend beschriebenen optischen Sensor entsprechen kann. Das Fahrzeug weist eine Antriebssteuerung auf, die dazu angepasst ist, das Fahrzeug unter Berücksichtigung von den etwaig ermittelten Modellobjekten zu steuern und beispielsweise die durch die Modellobjekte repräsentierten Objekte zu umfahren oder, falls notwendig, eine Bremsung einzuleiten.

### Bezugszeichenliste

- 5: Eindeutigkeitsbereich
- 6: obere Grenze des Eindeutigkeitsbereichs
- 7: Arbeitsbereich
- 8: maximaler Arbeitsabstand
- 9: Referenzsignal
- 10: Messsignal
- 11: erstes weiteres Messsignal
- 12: zweites weiteres Messsignal
- 13: Phasendifferenz
- 14: Abstandsinformation
- 15: Stärke
- 16: Schwellenwert
- 17: erste weitere Stärke
- 18: zweite weitere Stärke
- 20: Zielobjekt
- 21: Abstand
- 22: erster weiterer Abstand
- 23: zweiter weiterer Abstand
- 24: Reflektivität
- 25: maximale Reflektivität
- 26: minimale Reflektivität
- 27: erstes weiteres Zielobjekt
- 28: zweites weiteres Zielobjekt
- 29: Gesamtobjekt
- 32: Grenzabstand
- 34: Ausdehnung des Eindeutigkeitsbereichs
- 40: Sensorsignal
- 41: erstes weiteres Sensorsignal
- 42: zweites weiteres Sensorsignal
- 45: Modulationssignal
- 51: erste Stärke
- 52: zweite Stärke
- 53: Grenzwert
- 61: erster Abstand
- 62: zweiter Abstand
- 100: Verfahren
- 102: Bestrahlen
- 104: Empfangen
- 106: Bestimmen einer Phasendifferenz
- 108: Ermitteln einer Abstandsinformation
- 110: Bestimmen einer Stärke
- 111: Vorgeben des Schwellenwerts
- 112: Vergleichen
- 114: Auswahl des vorgegebenen Schwellenwerts
- 116: Auswahl des vorgegebenen Schwellenwerts
- 200: Abstandsmessvorrichtung
- 205: Modulationseinheit
- 210: Emittereinheit
- 212: Strahlungsquelle
- 214: Emitteroptik
- 220: Empfängereinheit
- 221: Empfängeroptik
- 222: Sensorelement
- 223: erstes weiteres Sensorelement
- 224: zweites weiteres Sensorelement
- 225: Phasendifferenzmodul
- 230: Abstandsbestimmungsmodul
- 235: Signalstärkenbestimmungsmodul
- 240: Vergleichsmodul
- 300: Verfahren zum Erfassen von Objekten
- 330: Verfahrensbeginn
- 332: Entscheidungspunkt
- 334: Ermitteln von Referenzdistanzwerten
- 336: Ermitteln von Distanzwerten, Intensitätswerten und Referenzintensitätswerten
- 338: Bestimmen von Differenzwerten
- 339: Markieren von Distanzwerten
- 340: Binarisieren und Glätten
- 342: Bestimmen von Relativdistanzwerten
- 344: Bestimmen von Relativintensitätswerten
- 346: Gewichten mit Relativdistanzwerten
- 348: Gewichten mit Relativintensitätswerten
- 350: Binarisieren
- 352: Ermitteln von Modellobjekten

## Patentansprüche

1. Verfahren (100) zur Bestimmung eines Abstandes (21) zu einem Zielobjekt (20) mittels einer Laufzeitmessung,
wobei das Verfahren (100) folgende Schritte umfasst:
- Bestrahlen (102) des Zielobjekts (20) mit einem elektromagnetischen Referenzsignal (9),
- Empfangen (104) eines von dem Zielobjekt (20) reflektierten Anteils des Referenzsignals (9) als ein Messsignal (10),
- Bestimmen (106) einer durch die Laufzeit des Messsignals (10) verursachten Phasendifferenz (13) zwischen dem Referenzsignal (9) und dem Messsignal (10),
wobei sich die im Rahmen des Verfahrens (100) bestimmten Phasendifferenzen (13) mit zunehmendem Abstand (21) zu dem Zielobjekt (20) wiederholen, wenn der Abstand (21) zu dem Zielobjekt (20) eine obere Grenze (6) eines Eindeutigkeitsbereichs (5) überschreitet,
- Ermitteln (108) einer Abstandsinformation (14) aus der Phasendifferenz (13),
- Bestimmen (110) einer Stärke (15) des Messsignals (10), **gekennzeichnet durch** ein
- Vergleichen (112) der Stärke (15) des Messsignals (10) mit einem vorgegebenen Schwellenwert (16), um festzustellen, ob das Zielobjekt (20) innerhalb des Eindeutigkeitsbereichs (5) angeordnet ist,
wobei der Schwellenwert (16) in Abhängigkeit von einer maximalen Reflektivität (25) möglicher Zielobjekte (20) und in Abhängigkeit von der Phasendifferenz (13) vorgegeben wird,
wobei der Schwellenwert (16) für jede Phasendifferenz (13) derart vorgegeben wird, dass die Stärke (15) des Messsignals (10) größer ist als der Schwellenwert (16), wenn das Zielobjekt (20) innerhalb des Eindeutigkeitsbereichs (5) angeordnet und eine Reflektivität des Zielobjekts (20) größer als eine minimale Reflektivität (26) möglicher Zielobjekte (20) ist, und dass die Stärke (15) des Messsignals (10) kleiner als der Schwellenwert (16) ist, wenn das Zielobjekt (20) außerhalb des Eindeutigkeitsbereichs (5) angeordnet und die Reflektivität des Zielobjekts (20) kleiner als die maximale Reflektivität (25) möglicher Zielobjekte (20) ist.

2. Verfahren (100) nach Anspruch 1,
wobei der Abstand (21) zu dem Zielobjekt (20) lediglich in einem innerhalb des Eindeutigkeitsbereichs (5) angeordneten erweiterten Arbeitsbereich (7) bestimmt wird,
wobei sich der Arbeitsbereich (7) bis zu einem maximalen Arbeitsabstand (8) erstreckt,
wobei der maximale Arbeitsabstand (8) derart vorgegeben ist,
dass die Stärke (15) des Messsignals (10) einem Grenzwert (53) zum einen dann entspricht, wenn das Zielobjekt (20) die minimale Reflektivität (26) möglicher Zielobjekte (20) aufweist und in dem maximalen Arbeitsabstand (8) angeordnet ist, und
dass die Stärke (15) des Messsignals (10) dem Grenzwert (53) zum anderen dann entspricht, wenn das Zielobjekt (20) die maximale Reflektivität (25) möglicher Zielobjekte (20) aufweist und in einem Grenzabstand (32) angeordnet ist,
wobei der Grenzabstand (32) dem maximalen Arbeitsabstand (8) zuzüglich einer Ausdehnung (34) des Eindeutigkeitsbereichs (5) der Laufzeitmessung entspricht.

3. Verfahren (100) nach einem der vorhergehenden Ansprüche,
wobei das Verfahren (100) als einen zusätzlichen Schritt umfasst:
- Auswahl (114) des vorgegebenen Schwellenwerts (16) in Abhängigkeit von einer Stärke des elektromagnetischen Referenzsignals (9).

4. Verfahren (100) nach einem der vorhergehenden Ansprüche,
wobei das Verfahren (100) als einen zusätzlichen Schritt umfasst:
- Auswahl (116) des vorgegebenen Schwellenwerts (16) in Abhängigkeit von einer Modulationsfrequenz des elektromagnetischen Referenzsignals (9).

5. Verfahren (100) nach einem der vorhergehenden Ansprüche,
wobei die Stärke (15) des Messsignals (10) als ein Signal-Rausch-Verhältnis eines das Messsignal (10) empfangenden Sensorelements (222) bestimmt wird.

6. Abstandsmessvorrichtung (200) zur Bestimmung eines Abstandes (21) zu einem Zielobjekt (20) mittels einer Laufzeitmessung mit
einer Emittereinheit (210), einer Empfängereinheit (220), einem Phasendifferenzmodul (225), einem Abstandsbestimmungsmodul (230), einem Signalstärkenbestimmungsmodul (235) und einem Vergleichsmodul (240), wobei die Emittereinheit (210) dazu ausgebildet ist, das Zielobjekt (20) mit einem elektromagnetischen Referenzsignal (9) zu bestrahlen,
wobei die Empfängereinheit (220) ein Sensorelement (222) umfasst, welches dazu ausgebildet ist, einen von dem Zielobjekt (20) reflektierten Anteil des Referenzsignals (9) als ein Messsignal (10) zu empfangen,
wobei das Phasendifferenzmodul (225) dazu ausgebildet ist, eine durch die Laufzeit des Messsignals (10) verursachte Phasendifferenz (13) zwischen dem Referenzsignal (9) und dem Messsignal (10) zu bestimmen,
wobei sich die durch das Phasendifferenzmodul (225) bestimmten Phasendifferenzen (13) mit zunehmendem Abstand (21) zu dem Zielobjekt (20) wiederholen, wenn der Abstand (21) zu dem Zielobjekt (20) eine obere Grenze (6) eines Eindeutigkeitsbereichs (5) überschreitet,
wobei das Abstandsbestimmungsmodul (230) dazu ausgebildet ist, eine Abstandsinformation (14) aus der Phasendifferenz (13) zu bestimmen, wobei das Signalstärkenbestimmungsmodul (235) dazu ausgebildet ist, eine Stärke (15) des Messsignals (10) zu bestimmen,
**dadurch gekennzeichnet,**
**dass** das Vergleichsmodul (240) dazu ausgebildet ist, die Stärke (15) des Messsignals (10) mit einem vorgegebenen Schwellenwert (16) zu vergleichen, um festzustellen, ob das Zielobjekt (20) innerhalb des Eindeutigkeitsbereichs (5) angeordnet ist,
**dass** der Schwellenwert (16) in Abhängigkeit von einer maximalen Reflektivität (25) möglicher Zielobjekte (20) und in Abhängigkeit von der Phasendifferenz (13) vorgegeben ist, und
**dass** der Schwellenwert (16) für jede Phasendifferenz (13) derart vorgegeben ist, dass die Stärke (15) des Messsignals (10) größer ist als der Schwellenwert (16), wenn das Zielobjekt (20) innerhalb des Eindeutigkeitsbereichs (5) angeordnet und eine Reflektivität des Zielobjekts (20) größer als eine minimale Reflektivität (26) möglicher Zielobjekte (20) ist, und dass die Stärke (15) des Messsignals (10) kleiner als der Schwellenwert (16) ist, wenn das Zielobjekt (20) außerhalb des Eindeutigkeitsbereichs (5) angeordnet und die Reflektivität des Zielobjekts (20) kleiner als die maximale Reflektivität (25) möglicher Zielobjekte (20) ist.

7. Abstandsmessvorrichtung (200) nach Anspruch 6,
wobei die Empfängereinheit (220) ein weiteres Sensorelement (223, 224) umfasst, welches dazu ausgebildet ist, einen von einem weiteren Zielobjekt (27, 28) reflektierten weiteren Anteil des Referenzsignals (9) als ein weiteres Messsignal (11, 12) zu empfangen,
wobei das Signalstärkenbestimmungsmodul (235) dazu ausgebildet ist, eine weitere Stärke (17, 18) des weiteren Messsignals (11, 12) zu bestimmen,
wobei das Vergleichsmodul (240) dazu ausgebildet ist, die weitere Stärke (17, 18) des weiteren Messsignals (11, 12) mit dem vorgegebenen Schwellenwert (16) zu vergleichen, um festzustellen, ob das weitere Zielobjekt (27, 28) innerhalb des Eindeutigkeitsbereichs (5) angeordnet ist.

8. Abstandsmessvorrichtung (200) nach einem der Ansprüche 6 bis 7, wobei das Vergleichsmodul (240) als ein Signal-Rausch-Filter ausgebildet ist.

## Claims

1. A method (100) of determining a distance (21) from a target object (20) by means of a time-of-flight measurement,
wherein the method (100) comprises the following steps:
- irradiating (102) the target object (20) with an electromagnetic reference signal (9);
- receiving (104) a portion of the reference signal (9) reflected by the target object (20) as a measurement signal (10);
- determining (106) a phase difference (13) between the reference signal (9) and the measurement signal (10) that is caused by the transit time of the measurement signal (10),
wherein the phase differences (13) determined within the framework of the method (100) repeat as the distance (21) from the target object (20) increases when the distance (21) from the target object (20) exceeds an upper limit (6) of a non-ambiguity range (5),
- determining (108) a piece of distance information (14) from the phase difference (13); and
- determining (110) a strength (15) of the measurement signal (10), **characterized by** a
- comparison (112) of the strength (15) of the measurement signal (10) with a predefined threshold value (16) to determine whether the target object (20) is arranged within the non-ambiguity range (5),
wherein the threshold value (16) is predefined in dependence on a maximum reflectivity (25) of possible target objects (20) and in dependence on the phase difference (13),
wherein the threshold value (16) is predefined for each phase difference (13) such that the strength (15) of the measurement signal (10) is greater than the threshold value (16) when the target object (20) is arranged within the non-ambiguity range (5) and a reflectivity of the target object (20) is greater than a minimal reflectivity (26) of possible target objects (20), and such that the strength (15) of the measurement signal (10) is smaller than the threshold value (16) if the target object (20) is arranged outside the non-ambiguity range (5) and the reflectivity of the target object (20) is smaller than the maximum reflectivity (25) of possible target objects (20).

2. A method (100) in accordance with claim 1,
wherein the distance (21) from the target object (20) is only determined in an extended working range (7) arranged within the non-ambiguity range (5), wherein the working range (7) extends up to a maximum working distance (8),
wherein the maximum working distance (8) is predefined such that the strength (15) of the measurement signal (10) corresponds to a limit value (53), on the one hand, when the target object (20) has the minimal reflectivity (26) of possible target objects (20) and is arranged at the maximum working distance (8), and
such that the strength (15) of the measurement signal (10) corresponds to the limit value (53), on the other hand, when the target object (20) has the maximum reflectivity (25) of possible target objects (20) and is arranged at a limit distance (32),
wherein the limit distance (32) corresponds to the maximum working distance (8) plus an extension (34) of the non-ambiguity range (5) of the time-of-flight measurement.

3. A method (100) in accordance with one of the preceding claims,
wherein the method (100) comprises as an additional step:
- selecting (114) the predefined threshold value (16) in dependence on a strength of the electromagnetic reference signal (9).

4. A method (100) in accordance with any one of the preceding claims,
wherein the method (100) comprises as an additional step:
- selecting (116) the predefined threshold value (16) in dependence on a modulation frequency of the electromagnetic reference signal (9).

5. A method (100) in accordance with any one of the preceding claims,
wherein the strength (15) of the measurement signal (10) is determined as a signal-to-noise ratio of a sensor element (222) receiving the measurement signal (10).

6. A distance measuring apparatus (200) for determining a distance (21) from a target object (20) by means of a time-of-flight measurement comprising an emitter unit (210); a receiver unit (220); a phase difference module (225); a distance determination module (230); a signal strength determination module (235); and a comparison module (240),
wherein the emitter unit (210) is configured to irradiate the target object (20) with an electromagnetic reference signal (9);
wherein the receiver unit (220) comprises a sensor element (222) which is configured to receive a portion of the reference signal (9) reflected by the target object (20) as a measurement signal (10);
wherein the phase difference module (225) is configured to determine a phase difference (13) between the reference signal (9) and the measurement signal (10) that is caused by the transit time of the measurement signal (10);
wherein the phase differences (13) determined by the phase difference module (225) repeat as the distance (21) from the target object (20) increases when the distance (21) from the target object (20) exceeds an upper limit (6) of a non-ambiguity range (5);
wherein the distance determination module (230) is configured to determine a piece of distance information (14) from the phase difference (13);
wherein the signal strength determination module (235) is configured to determine a strength (15) of the measurement signal (10), **characterized in that**
the comparison module (240) is configured to compare the strength (15) of the measurement signal (10) with a predefined threshold value (16) to determine whether the target object (20) is arranged within the non-ambiguity range (5);
**in that** the threshold value (16) is predefined in dependence on a maximum reflectivity (25) of possible target objects (20) and in dependence on the phase difference (13); and
**in that** the threshold value (16) is predefined for each phase difference (13) such that the strength (15) of the measurement signal (10) is greater than the threshold value (16) when the target object (20) is arranged within the non-ambiguity range (5) and a reflectivity of the target object (20) is greater than a minimal reflectivity (26) of possible target objects (20), and such that the strength (15) of the measurement signal (10) is smaller than the threshold value (16) if the target object (20) is arranged outside the non-ambiguity range (5) and the reflectivity of the target object (20) is smaller than the maximum reflectivity (25) of possible target objects (20).

7. A distance measuring apparatus (200) in accordance with claim 6, wherein the receiver unit (220) comprises a further sensor element (223, 224) which is configured to receive a further portion of the reference signal (9) reflected by a further target object (27, 28) as a further measurement signal (11, 12);
wherein the signal strength determination module (235) is configured to determine a further strength (17, 18) of the further measurement signal (11, 12);
wherein the comparison module (240) is configured to compare the further strength (17, 18) of the further measurement signal (11, 12) with the predefined threshold value (16) to determine whether the further target object (27, 28) is arranged within the non-ambiguity range (5).

8. A distance measuring apparatus (200) in accordance with one of the claims 6 to 7,
wherein the comparison module (240) is configured as a signal-to-noise filter.

## Revendications

1. Procédé (100) pour déterminer une distance (21) à un objet cible (20) au moyen d'une mesure du temps de propagation,
le procédé (100) comprenant les étapes suivantes consistant à :
- irradier (102) l'objet cible (20) avec un signal électromagnétique de référence (9),
- recevoir (104) une partie du signal de référence (9) réfléchie par l'objet cible (20) en tant que signal de mesure (10),
- déterminer (106) une différence de phase (13) entre le signal de référence (9) et le signal de mesure (10) provoquée par le temps de propagation du signal de mesure (10),
dans lequel les différences de phase (13) déterminées dans le cadre du procédé (100) se répètent avec une distance croissante (21) à l'objet cible (20) lorsque la distance (21) à l'objet cible (20) dépasse une limite supérieure (6) d'une plage d'univocité (5),
- déterminer (108) une information de distance (14) à partir de la différence de phase (13),
- déterminer (110) une intensité (15) du signal de mesure (10), **caractérisé par** l'étape consistant à
- comparer (112) l'intensité (15) du signal de mesure (10) avec une valeur seuil prédéfinie (16) pour déterminer si l'objet cible (20) se trouve à l'intérieur de la plage d'univocité (5),
dans lequel la valeur seuil (16) est prédéfinie en fonction d'une réflectivité maximale (25) d'objets cibles possibles (20) et en fonction de la différence de phase (13),
dans lequel la valeur seuil (16) est prédéfinie pour chaque différence de phase (13) de telle sorte que l'intensité (15) du signal de mesure (10) soit supérieure à la valeur seuil (16) si l'objet cible (20) se trouve à l'intérieur de la plage d'univocité (5) et une réflectivité de l'objet cible (20) est supérieure à une réflectivité minimale (26) d'objets cibles possibles (20), et que l'intensité (15) du signal de mesure (10) soit inférieure à la valeur seuil (16) si l'objet cible (20) se trouve à l'extérieur de la plage d'univocité (5) et la réflectivité de l'objet cible (20) est inférieure à la réflectivité maximale (25) d'objets cibles possibles (20).

2. Procédé (100) selon la revendication 1,
dans lequel la distance (21) à l'objet cible (20) est déterminée seulement dans une plage de travail étendue (7) se trouvant à l'intérieur de la plage d'univocité (5),
dans lequel la plage de travail (7) s'étend jusqu'à une distance de travail maximale (8),
dans lequel la distance de travail maximale (8) est prédéfinie de telle sorte
que l'intensité (15) du signal de mesure (10) corresponde à une valeur limite (53) d'une part si l'objet cible (20) présente la réflectivité minimale (26) d'objets cibles possibles (20) et se trouve à la distance de travail maximale (8), et
que l'intensité (15) du signal de mesure (10) corresponde à la valeur limite (53) d'autre part si l'objet cible (20) présente la réflectivité maximale (25) d'objets cibles possibles (20) et se trouve à une distance limite (32),
dans lequel la distance limite (32) correspond à la distance de travail maximale (8) plus une extension (34) de la plage d'univocité (5) de la mesure du temps de propagation.

3. Procédé (100) selon l'une des revendications précédentes,
dans lequel le procédé (100) comprend l'étape supplémentaire consistant à :
- sélectionner (114) la valeur seuil prédéfinie (16) en fonction d'une intensité du signal électromagnétique de référence (9).

4. Procédé (100) selon l'une des revendications précédentes,
dans lequel le procédé (100) comprend l'étape supplémentaire consistant à :
- sélectionner (116) la valeur seuil prédéfinie (16) en fonction d'une fréquence de modulation du signal électromagnétique de référence (9).

5. Procédé (100) selon l'une des revendications précédentes,
dans lequel l'intensité (15) du signal de mesure (10) est déterminée comme un rapport signal/bruit d'un élément capteur (222) recevant le signal de mesure (10).

6. Dispositif de mesure de distance (200) pour déterminer une distance (21) à un objet cible (20) au moyen d'une mesure du temps de propagation, comprenant :
une unité d'émission (210), une unité de réception (220), un module de différence de phase (225), un module de détermination de distance (230), un module de détermination d'intensité de signal (235) et un module de comparaison (240),
dans lequel l'unité d'émission (210) est conçue pour irradier l'objet cible (20) avec un signal électromagnétique de référence (9),
dans lequel l'unité de réception (220) comprend un élément capteur (222) qui est conçu pour recevoir une partie du signal de référence (9) réfléchie par l'objet cible (20) en tant que signal de mesure (10),
dans lequel le module de différence de phase (225) est conçu pour déterminer une différence de phase (13) entre le signal de référence (9) et le signal de mesure (10) provoquée par le temps de propagation du signal de mesure (10),
dans lequel les différences de phase (13) déterminées par le module de différence de phase (225) se répètent avec une distance croissante (21) à l'objet cible (20) lorsque la distance (21) à l'objet cible (20) dépasse une limite supérieure (6) d'une plage d'univocité (5),
dans lequel le module de détermination de distance (230) est conçu pour déterminer une information de distance (14) à partir de la différence de phase (13),
dans lequel le module de détermination d'intensité de signal (235) est conçu pour déterminer une intensité (15) du signal de mesure (10),
**caractérisé en ce**
**que** le module de comparaison (240) est conçu pour comparer l'intensité (15) du signal de mesure (10) avec une valeur seuil prédéfinie (16) pour déterminer si l'objet cible (20) se trouve à l'intérieur de la plage d'univocité (5),
**que** la valeur seuil (16) est prédéfinie en fonction d'une réflectivité maximale (25) d'objets cibles possibles (20) et en fonction de la différence de phase (13), et
**que** la valeur seuil (16) est prédéfinie pour chaque différence de phase (13) de telle sorte que l'intensité (15) du signal de mesure (10) soit supérieure à la valeur seuil (16) si l'objet cible (20) se trouve à l'intérieur de la plage d'univocité (5) et une réflectivité de l'objet cible (20) est supérieure à une réflectivité minimale (26) d'objets cibles possibles (20), et que l'intensité (15) du signal de mesure (10) soit inférieure à la valeur seuil (16) si l'objet cible (20) se trouve à l'extérieur de la plage d'univocité (5) et la réflectivité de l'objet cible (20) est inférieure à la réflectivité maximale (25) d'objets cibles possibles (20).

7. Dispositif de mesure de distance (200) selon la revendication 6,
dans lequel l'unité de réception (220) comprend un autre élément capteur (223, 224) qui est conçu pour recevoir une autre partie du signal de référence (9) réfléchie par un autre objet cible (27, 28) en tant qu'autre signal de mesure (11, 12),
dans lequel le module de détermination d'intensité de signal (235) est conçu pour déterminer une autre intensité (17, 18) de l'autre signal de mesure (11, 12),
dans lequel le module de comparaison (240) est conçu pour comparer l'autre intensité (17, 18) de l'autre signal de mesure (11, 12) avec la valeur seuil prédéfinie (16) pour déterminer si l'autre objet cible (27, 28) se trouve à l'intérieur de la plage d'univocité (5).

8. Dispositif de mesure de distance (200) selon l'une des revendications 6 à 7,
dans lequel le module de comparaison (240) est conçu comme un filtre signal/bruit.
